# EUROPEAN PATENT SPECIFICATION

(11) **EP 3 085 607 B1**
(45) Date of publication and mention of the grant of the patent: **26.06.2019**
(21) Application number: 15164926.6
(22) Date of filing: 23.04.2015
(51) Int. Cl.: B62J 11/00

(54) **REVERSIBLE BOTTLE CAGE FOR BICYCLES**
WENDBARER FLASCHENHALTER FÜR FAHRRÄDER
CAGE DE BOUTEILLE RÉVERSIBLE POUR BICYCLETTES

(43) Date of publication of application: 26.10.2016
(73) Proprietor: Nuvo Enterprise Co., Ltd., Changhua Hsien (TW)
(72) Inventor: Shih, Ho-Jen, Fuhsing Hsiang, Changhua Hsien (TW)
(74) Representative: Lang, Christian

(56) References cited:
- CN-U- 204 137 201
- DE-U1-202009 011 342
- FR-A1- 2 615 158

## Description

### BACKGROUND OF THE INVENTION

### Fields of the invention

The present invention relates to a reversible bottle cage for bicycles, especially to a reversible bottle cage for either left or right handed use.

### Descriptions of Related Art

People lose water quickly and become dehydrated during bicycling. To keep going, they need to drink water to stay hydrated. Thus a bottle cage mounted on the bike for holding a water bottle is available now. The bottle cage allows riders to have easy access to the water bottle during the ride.

In documents CN 204 137 201 U, on which the preamble of independent claim 1 is based, DE 20 2009 011 342 U1 and FR 2 615 158 A1 different types of conventional reversible bottle cages for bicycles are disclosed.

The conventional bottle cage includes a base and a holder. The base is attached to a frame tubing of a bicycle for mounting the bottle cage while the holder is with a lateral entry for receiving a water bottle. While in use, the water bottle is directly passed through the entry to be mounted and fixed between the base and the holder. Thus the water bottle is carried conveniently and the rider gets access to the water bottle easily.

However, the conventional bottle cage mentioned above has following problems. The entry is fixed and unable to be adjusted. Thus, the water bottle is difficult to access when the rider's dominant side is different from the direction of the entry. In serious cases, the rider's safety is affected while reaching the water bottle in the cage body.

The entry direction of the conventional bottle cage is fixed and unable to be adjusted according to the handedness of the rider. Thus, there is room for improvement and a need to provide a novel bottle cage that solves the problem of the conventional bottle cage.

### SUMMARY OF THE INVENTION

Therefore, it is a primary object of the present invention to provide a reversible bottle cage for bicycles, for either left or right handed riders. In accordance with the present invention there is provided a reversible bottle cage for bicycles, as set out in independent claim 1. Preferred embodiments of the present invention are laid down in the appended dependent claims.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein:
Fig. 1 is a perspective view of an embodiment of a reversible bottle cage for bicycles, according to the present invention;
Fig. 2 is an explosive view of an embodiment of a reversible bottle cage for bicycles, according to the present invention;
Fig. 3 is an enlarged perspective view of a stopper of the reversible bottle cage for bicycles, of the present invention;
Fig. 4 shows a longitudinal cross sectional view and partial enlarged views of an embodiment of a reversible bottle cage for bicycles, according to the present invention;
Fig. 5 is a schematic drawing showing an embodiment of a reversible bottle cage for bicycles, according to the present invention, in use, with a first end at an upper position;
Fig. 6 is a perspective view of an embodiment of a reversible bottle cage for bicycles, according to the present invention, in use, with a second end at an upper position;
Fig. 7 is a schematic drawing showing an embodiment of a reversible bottle cage for bicycles, according to the present invention, in use, with a second end at an upper position.

### DETAILED DESCRIPTION OF THE PREFFERED EMBODIMENT

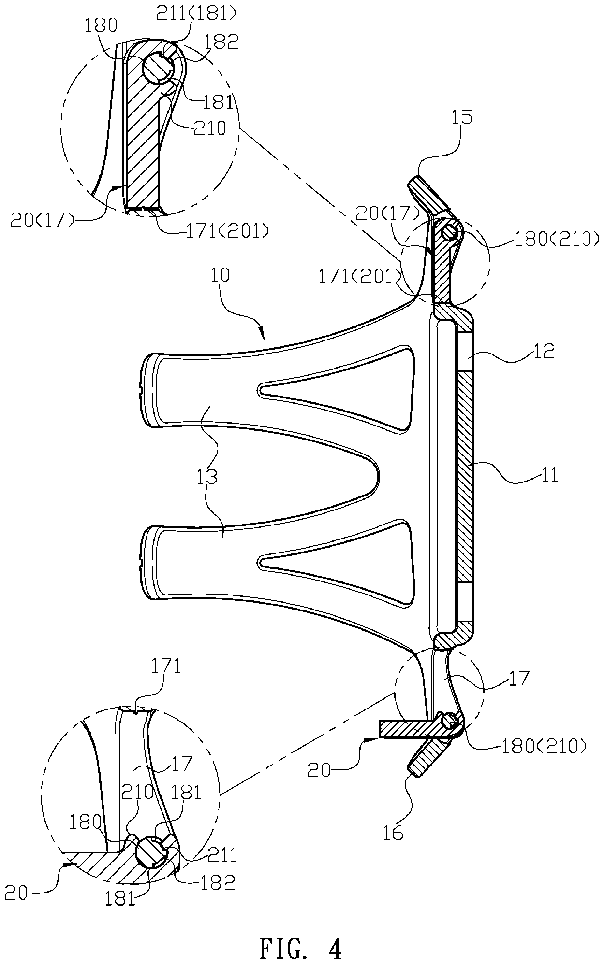

Refer from Fig. 1 to Fig. 4, a reversible bottle cage for bicycles, of the present invention includes a cage body 10 and two stoppers 20. The cage body 10 includes a rear plate 11. The rear plate 11 is disposed with mounting holes 12 through each of which a screw is passed and fastened so as to fix the cage body 10 on a frame tubing of a bicycle. The two sides of the rear plate 11 are connected to one spring clip 13 respectively. The two spring clips 13 are bent forward. There is a height difference between the two spring clips 13, so that a side opening 14 is formed respectively over and under each spring clip 13. The rear plate 11 includes a first end 15 and a second end 16. A mounting slot 17 is placed on the first end 15 and the second end 16 respectively. A connection member 18 is disposed in each mounting slot 17. Each stopper 20 is arranged with a connection portion 21 at one end thereof. Each connection portion 21 is assembled with a corresponding one of the connection members 18 so that the stopper 20 is pivotally connected to the cage body 10. According to the rider's handedness, the first end 15 or the second end 16 is placed at an upper position and then the stopper 20 at a lower position is rotated to get out of the mounting slot 17. Thus, a water bottle 30 mounted through the larger side opening 14 at an upper position, which is the side opening provided over the spring clip 13 which is positioned at the lowest height, is supported and positioned by the outward rotated stopper 20 at the lower position.

In the reversible bottle cage for bicycles, of the present invention designed for either left or right handler, each connection member 18 is a pin that is passed through the respective mounting slot 17 and the connection portion 21 of the respective stopper 20 at the same time.

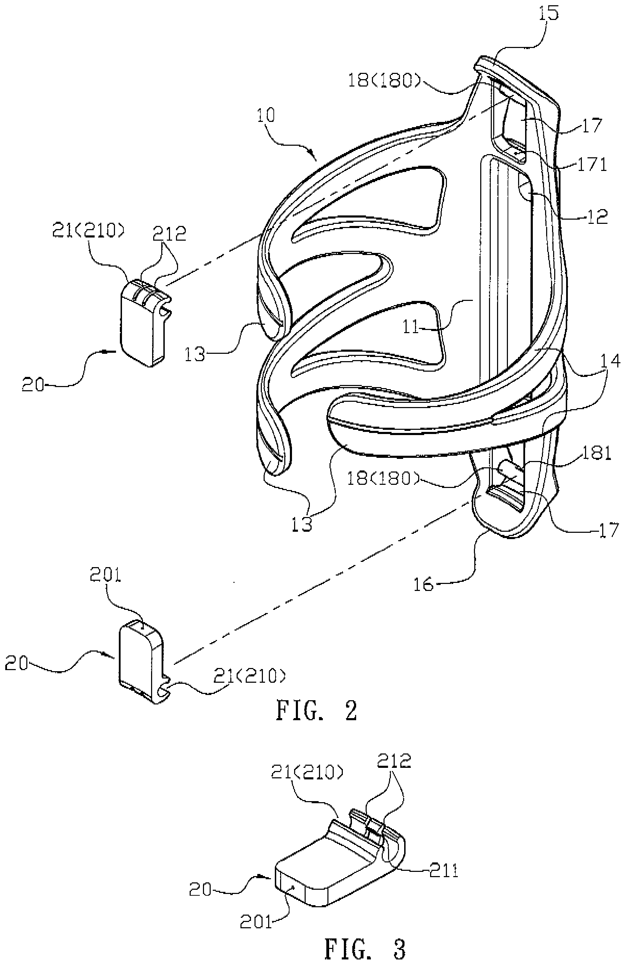

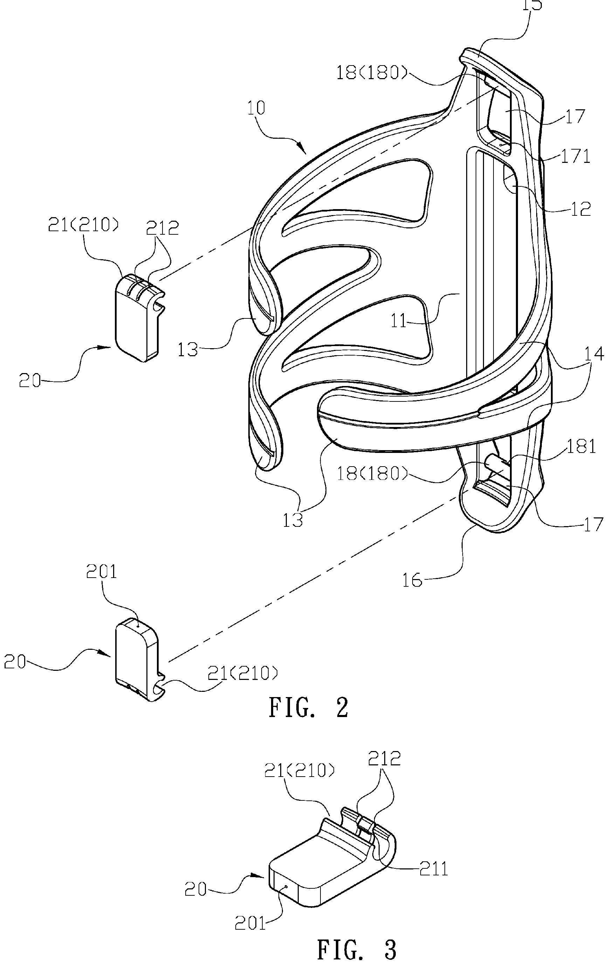

In the reversible bottle cage for bicycles, of the present invention designed for either left or right handler, each connection member 18 can be a horizontal pin 180 while each connection portion 21 can be a C-shaped seat 210 projecting from one side of the respective stopper 20, as shown in Fig. 2. Each stopper 20 is pivotally connected to the cage body 10 by the C-shaped seat 210 fastened on the respective horizontal pin 180. Thus each stopper 20 can be rotated to get out of or get into the respective mounting slot 17 smoothly and easily.

In the reversible bottle cage for bicycles, of the present invention designed for either left or right handler, each horizontal pin 180 is integrally formed with the respective mounting slot 17.

Refer to Fig. 2, Fig.3 and Fig. 4, two adjacent concave portions 181 are located at the rear circumference of each horizontal pin 180 while a fastening block 211 is formed on the inner edge of the opening of each C-shaped seat 210. Each fastening block 211 is adapted to be locked into one of the concave portions 181, such that the respective stopper 20 is stopped firmly while being switched between a pull-out and a push-in in relation to the respective mounting slot 17. At least one side of one concave portion 181 is disposed with a chamfer 182, whereat the concave portion 181 can keep adjacent to the other concave portion 181 by means of the chamfer 182.

In the reversible bottle cage for bicycles, of the present invention designed for either left or right handler, each C-shaped seat 210 is further arranged with two elastic grooves 212.

Moreover, each stopper 20 and each mounting slot 17 are disposed with a positioning hole 201 and a positioning bump 171 respectively at one end thereof opposite to the end at which the stopper is pivotally connected to the cage body.

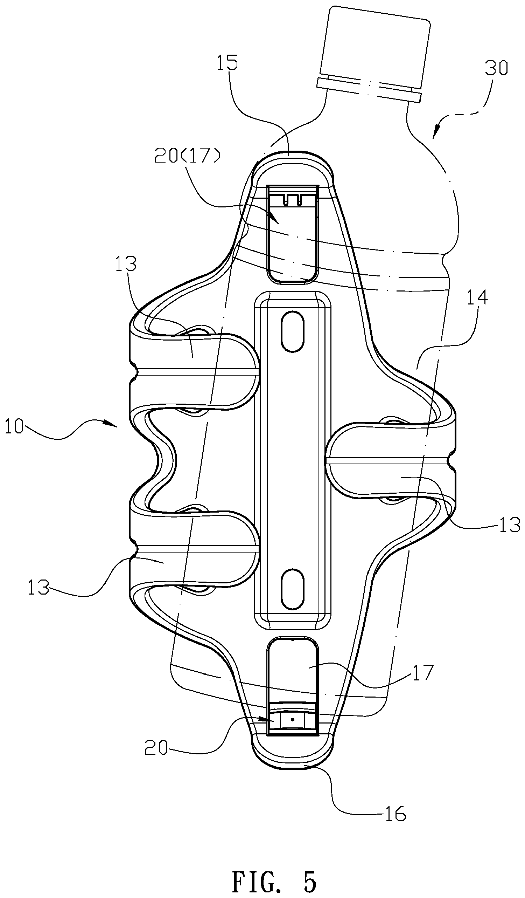

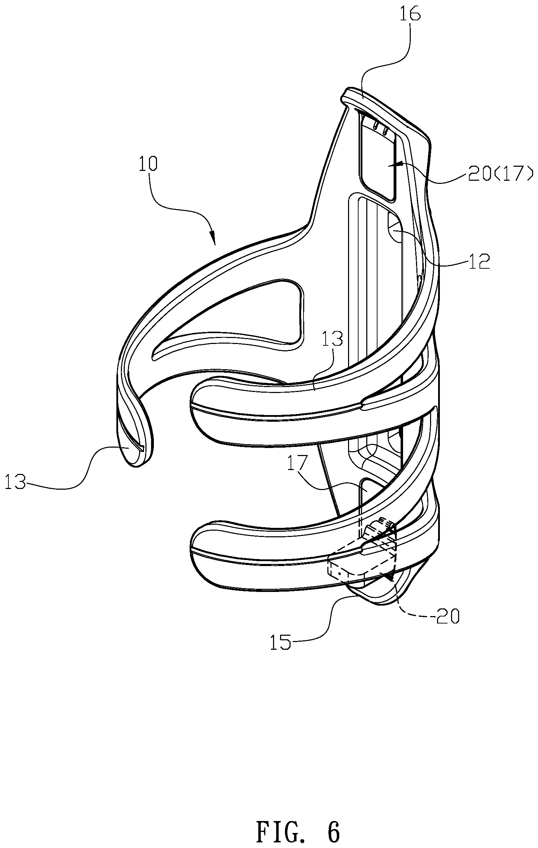

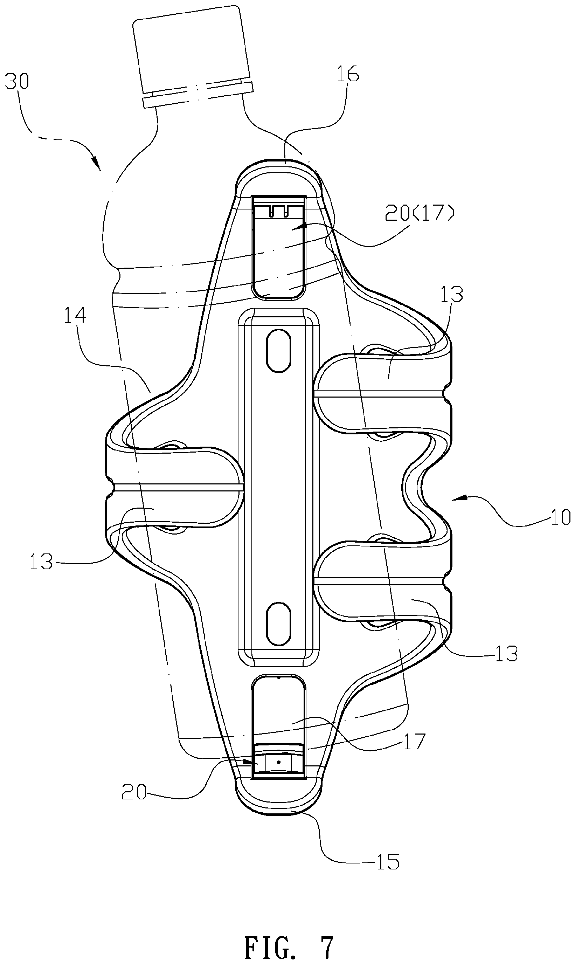

Refer to Fig. 5, Fig. 6 and Fig 7, set the first end 15 or the second end 16 up according to handedness of the rider and fix the cage body 10 to the bicycle while in use. Thus, the larger side opening 14 at an upper position is turned to the right side or the left side to match the rider's handedness. Then the stopper 20 at the lower position is rotated to get out of the mounting slot 17. Thus, the water bottle 30 loaded through the larger side opening 14 is supported and positioned by the stopper 20 at the lower position. The rider can carry the water bottle 30 and have access to the water bottle for water intake during the ride conveniently.

In summary, the reversible bottle cage for bicycles, of the present invention has following advantages. First the direction of the cage body 10 can be adjusted according to the handedness of the rider. Thus, the water bottle 30 is easy to get in and out of the cage body 10 more smoothly. The rider's safety is further ensured. Moreover, the cage body 10 is suitable for right-handed and left-handed use. The requirements of all users are met so that the market share of the bottle cage will be increased significantly.

Additional advantages and modifications will readily occur to those skilled in the art. Therefore, the invention is defined by the appended claims and not limited to the specific details, and representative devices shown and described herein.

## Claims

1. A reversible bottle cage for bicycles, comprising a cage body (10) and two stoppers (20);
wherein the cage body (10) includes a rear plate (11) whose two lateral sides are connected to one spring clip (13) respectively; wherein the spring clips (13) are bent forward; there is a height difference between the two spring clips (13); wherein a side opening (14) is formed respectively over and under each spring clip (13); wherein the rear plate (11) includes a first end (15) and a second end (16) while a mounting slot (17) is disposed on the first end (15) and the second end (16) respectively; wherein a connection member (18) is arranged in each mounting slot (17); wherein each stopper (20) has a connection portion (21) formed on one end thereof, and wherein, in use, the first end (15) or the second end (16) of the rear plate (11) is mountable at an upper position according to the rider's handedness; **characterized in that** each of the stoppers (20) is pivotally connected to the cage body (10) by assembling the connection portion (21) of the stopper (20) with a corresponding one of the connection members (18) and the stopper (20) at a lower position can be rotated to get out of the mounting slot (17) for supporting and positioning a water bottle (30) which is adapted to be mounted through the side opening (14) which is provided over the spring clip (13) which is positioned at the lowest height.

2. The reversible bottle cage for bicycles as claimed in claim 1, wherein at least one mounting hole (12) is formed on the rear plate (11).

3. The reversible bottle cage for bicycles as claimed in claim 1, wherein each connection member (18) is a pin that is passed through the respective mounting slot (17) and the connection portion (21) of the respective stopper (20) simultaneously.

4. The reversible bottle cage for bicycles as claimed in claim 1, wherein each connection member (18) is a horizontal pin (180) while each connection portion (21) is a C-shaped seat (210) projecting from one side of the respective stopper (20); each stopper (20) is pivotally connected to the cage body (10) by the C-shaped seat (210) fastened on the respective horizontal pin (180), so that each stopper (20) is rotatable to get out of or get into the respective mounting slot (17) smoothly and easily.

5. The reversible bottle cage for bicycles as claimed in claim 4, wherein each horizontal pin (180) is integrally formed with the respective mounting slot (17).

6. The reversible bottle cage for bicycles as claimed in claim 4, wherein two adjacent concave portions (181) are located at the rear circumference of each horizontal pin (180) while a fastening block (211) is formed on the inner edge of the opening of each C-shaped seat (210); wherein each fastening block (211) is adapted to be locked into one of the concave portions (181) in order to stop the respective stopper (20) firmly in a pull-out or a push-in state in relation to the mounting slot (17); at least one side of a concave portion (181) is formed with a chamfer (182), whereat the concave portion (181) can keep adjacent to the other concave portion (181) by means of the chamfer (182).

7. The reversible bottle cage for bicycles as claimed in claim 4, wherein each C-shaped seat (210) is arranged with two elastic grooves (212).

8. The reversible bottle cage for bicycles as claimed in claim 1, wherein each stopper (20) and each mounting slot (17) are formed with a positioning hole (201) and a positioning bump (171) respectively at one end thereof opposite to the end at which the stopper (20) is pivotally connected to the cage body (10).

## Patentansprüche

1. Ein reversibler Flaschenhalter für Fahrräder, der einen Tragkörper (10) und zwei Stoppelemente (20) umfasst,
wobei der Tragkörper (10) eine hintere Platte (11) umfasst, deren zwei laterale Seiten jeweils mit einer Federklammer (13) verbunden sind,
wobei die Federklammern (13) nach vorne gebogen sind, wobei eine Höhendifferenz zwischen den zwei Federklammern (13) existiert, wobei eine Seitenöffnung (14) entsprechend über und unter jeder Federklammer (13) ausgebildet ist, wobei die hintere Platte (11) ein erstes Ende (15) und ein zweites Ende (16) umfasst, während ein Montageschlitz (17) entsprechend an dem ersten Ende (15) und dem zweiten Ende (16) angeordnet ist, wobei ein Verbindungselement (18) in jedem Montageschlitz (17) angeordnet ist,
wobei jedes Stoppelement (20) einen Verbindungsabschnitt (21) aufweist, der an einem Ende davon ausgebildet ist, und wobei im Gebrauch das erste Ende (15) oder das zweite Ende (16) der hinteren Platte (11) an einer oberen Position gemäß der Händigkeit des Fahrers montierbar ist;
**dadurch gekennzeichnet, dass**
jedes der Stoppelemente (20) drehbar mit dem Tragkörper (10) durch das Anordnen des Verbindungsabschnitts (21) des Stoppelements (20) mit einem entsprechenden der Verbindungselemente (18) verbunden ist und dass das Stoppelement (20) an einer unteren Position rotiert werden kann, um aus dem Montageschlitz (17) zu gelangen, um eine Wasserflasche (30) zu tragen und zu positionieren, die darauf ausgelegt ist, durch die Seitenöffnung (14) montiert zu werden, die über der Federklammer (13) bereitgestellt ist, die an der niedrigsten Höhe angeordnet ist.

2. Reversibler Flaschenhalter für Fahrräder gemäß Anspruch 1, bei welchem zumindest ein Montageloch (12) an der hinteren Platte (11) ausgebildet ist,

3. Reversibler Flaschenhalter für Fahrräder gemäß Anspruch 1, bei welchem jedes Verbindungselement (18) ein Stift ist, der simultan durch den jeweiligen Montageschlitz (17) und den Verbindungsabschnitt (21) des jeweiligen Stoppelements (20) geführt ist.

4. Reversibler Flaschenhalter für Fahrräder gemäß Anspruch 1, bei welchem jedes Verbindungselement (18) ein horizontaler Stift (180) ist, während jeder Verbindungsabschnitt (21) ein C-förmiger Sitz (210) ist, der von einer Seite des jeweiligen Stoppelements (20) vorsteht, wobei jedes Stoppelement (20) durch den C-förmigen Sitz (210), der an dem entsprechenden horizontalen Stift (180) befestigt ist, drehbar mit dem Tragkörper (10) verbunden ist, so dass jedes Stoppelement (20) drehbar ist, um reibungsfrei und leicht in den entsprechenden Montageschlitz (17) hinein zu gelangen oder daraus heraus zu gelangen.

5. Reversibler Flaschenhalter für Fahrräder gemäß Anspruch 4, bei welchem jeder horizontale Stift (180) einstückig mit dem jeweiligen Montageschlitz (17) ausgebildet ist.

6. Reversibler Flaschenhalter für Fahrräder gemäß Anspruch 4, bei welchem zwei benachbarte konkave Abschnitte (181) an dem hinteren Umfang von jedem horizontalen Stift (180) angeordnet sind, während ein Befestigungsblock (211) an dem inneren Rand der Öffnung von jedem C-förmigen Sitz (210) ausgebildet ist; wobei jeder Befestigungsblock (211) darauf ausgelegt ist, in einen der konkaven Abschnitte (181) eingerastet zu werden, um das jeweilige Stoppelement (20) in einem herausgezogenen oder eingedrücktem Zustand relativ zu dem Montageschlitz (17) fest zu fixieren, wobei zumindest eine Seite eines konkaven Abschnitts (181) mit einer Abschrägung (182) ausgebildet ist, wobei der konkave Abschnitt (181) durch die Abschrägung (182) zu dem anderen konkaven Abschnitt (181) benachbart bleiben kann.

7. Reversibler Flaschenhalter für Fahrräder gemäß Anspruch 4, bei welchem jeder C-förmige Sitz (210) mit zwei elastischen Nuten (212) ausgestattet ist.

8. Reversibler Flaschenhalter für Fahrräder gemäß Anspruch 1, bei welchem jedes Stoppelement (20) und jeder Montageschlitz (17) mit einem Positionierloch (201) bzw. mit einer Positioniererhöhung (171) an einem Ende davon ausgebildet sind, das entgegengesetzt zu dem Ende ist, an dem das Stoppelement (20) drehbar mit dem Tragkörper (10) verbunden ist.

## Revendications

1. Cage de bouteille réversible pour bicyclettes, comprenant un corps de cage (10) et deux butées (20);
dans laquelle le corps de cage (10) inclut une plaque arrière (11) dont les deux côtés latéraux sont reliés à une pince à ressort (13) respectivement ; dans laquelle les pinces à ressort (13) sont pliées vers l'avant; il existe une différence de hauteur entre les deux pinces à ressort (13); dans laquelle une ouverture latérale (14) est formée respectivement au-dessus et en dessous de chaque pince à ressort (13); dans laquelle la plaque arrière (11) inclut une première extrémité (15) et une seconde extrémité (16) tandis qu'une encoche de montage (17) est disposée sur la première extrémité (15) et la seconde extrémité (16) respectivement; dans laquelle un élément de liaison (18) est agencé dans chaque encoche de montage (17);
dans laquelle
chaque butée (20) comporte une partie de liaison (21) formée sur une extrémité de celle-ci, et dans laquelle, lors de l'utilisation, la première extrémité (15) ou la seconde extrémité (16) de la plaque arrière (11) peut être montée au niveau d'une position supérieure en fonction de la manualité du coureur ; **caractérisée en ce que** chacune des butées (20) est reliée en pivotement au corps de cage (10) par assemblage de la partie de liaison (21) de la butée (20) à un correspondant des éléments de liaison (18) et la butée (20) au niveau d'une position inférieure peut être tournée pour sortir de l'encoche de montage (17) pour soutenir et positionner une bouteille d'eau (30) qui est adaptée pour être montée à travers l'ouverture latérale (14) qui est prévue sur la pince à ressort (13) qui est positionnée à la hauteur la plus basse.

2. Cage de bouteille réversible pour bicyclettes selon la revendication 1, dans laquelle au moins un trou de montage (12) est formé sur la plaque arrière (11).

3. Cage de bouteille réversible pour bicyclettes selon la revendication 1, dans laquelle chaque élément de liaison (18) est une broche qui est passée à travers l'encoche de montage (17) respective et la partie de liaison (21) de la butée (20) respective simultanément.

4. Cage de bouteille réversible pour bicyclettes selon la revendication 1, dans laquelle chaque élément de liaison (18) est une broche horizontale (180) tandis que chaque partie de liaison (21) est un siège en forme de C (210) faisant saillie à partir d'un côté de la butée (20) respective ; chaque butée (20) est reliée en pivotement au corps de cage (10) par le siège en forme de C (210) fixé sur la broche horizontale (180) respective, de sorte que chaque butée (20) peut être tournée pour sortir de ou entrer dans l'encoche de montage (17) respective en douceur et facilement.

5. Cage de bouteille réversible pour bicyclettes selon la revendication 4, dans laquelle chaque broche horizontale (180) est formée d'un seul tenant avec l'encoche de montage (17) respective.

6. Cage de bouteille réversible pour bicyclettes selon la revendication 4, dans laquelle deux parties concaves (181) adjacentes sont situées au niveau de la circonférence arrière de chaque broche horizontale (180) tandis qu'un bloc de fixation (211) est formé sur le bord interne de l'ouverture de chaque siège en forme de C (210); dans laquelle chaque bloc de fixation (211) est adapté pour être verrouillé dans l'une des parties concaves (181) afin d'arrêter la butée (20) respective fermement dans un état de retrait ou d'introduction relativement à l'encoche de montage (17); au moins un côté d'une partie concave (181) est formée avec un chanfrein (182), moyennant quoi la partie concave (181) peut rester adjacente à l'autre partie concave (181) au moyen du chanfrein (182).

7. Cage de bouteille réversible pour bicyclettes selon la revendication 4, dans laquelle chaque siège en forme de C (210) est agencé avec deux rainures élastiques (212).

8. Cage de bouteille réversible pour bicyclettes selon la revendication 1, dans laquelle chaque butée (20) et chaque encoche de montage (17) sont formées avec un trou de positionnement (201) et une bosse de positionnement (171) respectivement au niveau d'une extrémité de celles-ci opposée à l'extrémité à laquelle la butée (20) est reliée en pivotement au corps de cage (10).
